# EUROPÄISCHE PATENTSCHRIFT

(11) **EP 1 193 407 B1**
(45) Veröffentlichungstag und Bekanntmachung des Hinweises auf die Patenterteilung: **17.12.2003**
(21) Anmeldenummer: 01119664.9
(22) Anmeldetag: 22.08.2001
(51) Int. Cl.: F16B 35/04, F16B 25/10, F16B 33/02

(54) **Distanzschraube**
Distance screw
Vis d'ecartement

(30) Priorität: 28.08.2000 DE 20014869 U
(43) Veröffentlichungstag der Anmeldung: 03.04.2002
(73) Patentinhaber: Berner GmbH, 74653 Künzelsau (DE)
(72) Erfinder: Hölterhoff, Karl Fr., 42699 Solingen (DE); Löffler, Ralf, 74677 Dörzbach (DE)
(74) Vertreter: Bunke, Holger, Dr.rer.nat. Dipl.-Chem.

(56) Entgegenhaltungen:
- EP-A- 0 267 153
- EP-A- 0 314 950
- DE-U- 20 014 869
- FR-A- 2 784 722
- US-A- 3 124 031
- US-A- 5 273 383

## Beschreibung

Die Erfindung betrifft eine Distanzschraube mit einer Ausnehmung zum Einstecken eines Werkzeugs, mit zwei, von einem gewindelosen Abschnitt voneinander getrennten Gewindeabschnitten, wobei der Nenndurchmesser der Schraube im Bereich des vorderen Gewindeabschnitts und des gewindelosen Abschnitts kleiner ist als im Bereich des hinteren, werkzeugseitigen Gewindeabschnitts und wobei sich die Schraube im Bereich des Übergangs von dem hinteren Gewindeabschnitt zu dem gewindelosen Abschnitt hin konisch verjüngt.

Solche im Handel erhältlichen Distanzschrauben werden zur Befestigung von Bauteilen wie z. B. Paneelen, Zargen, Tür- und Fensterrahmen und dergleichen an Wänden, Böden und Decken verwendet, wobei der vordere Gewindeabschnitt in der Wand, im Boden oder in der Decke mittels eines Dübels verankert wird, während der hintere Gewindeabschnitt der Festlegung des zu befestigenden Bauteils in einem definierten, aber veränderlichen bzw. justierbaren Abstand von der Oberfläche des Gebäudeteils dient. Mit solchen Distanzschrauben können z. B. Türzargen in dafür vorgesehene Wandöffnungen eingesetzt und exakt ausgerichtet werden, und zwar auch dann, wenn die Wandöffnung insgesamt zu groß ist oder wenn die Begrenzungsflächen der Wandöffnung nicht exakt rechtwinklig oder parallel zueinander verlaufen.

Aus der US-PS 3 124 031 sind Schrauben bekannt, die zwar nicht der eingangs genannten Gattung angehören, weil es sich nicht um Distanzschrauben handelt, die aber zwei verschiedene Gewindeabschnitte besitzen, wobei der Nenndurchmesser der Schraube im Bereich des vorderen Gewindeabschnitts kleiner ist als im Bereich des hinteren, werkzeugseitigen Gewindeabschnitts und wobei sich die Schraube im Bereich des Übergangs vom hinteren Gewindeabschnitt zum vorderen Gewindeabschnitt hin konisch verjüngt. Bei einer besonderen Ausführungsform dieser bekannten Schraube ist im Bereich des sich konisch verjüngenden Übergangs zwischen den beiden Gewindeabschnitten ein als Schneidkante ausgebildeter Längsschlitz vorgesehen. Diese Schneidkante bewirkt, daß das Bohrloch, in das die Schraube eingesetzt wird, spanabhebend erweitert wird und so dem dickeren, hinteren Schraubenteil das Eindringen in das Bohrloch erleichtert, ohne daß die materialverdrängende Wirkung des dickeren Schraubenendes zur Beschädigung oder Zerstörung der Oberfläche des Materials oder Bauteils führt, in dem sich das Bohrloch befindet.

Der gewünschte Erfolg wird mit derartigen Schneidkanten jedoch nur dann erzielt, wenn die Schneidkanten eine exakte, definierte Geometrie aufweisen. Es ist jedoch aufwendig und teuer, billige Massenartikel, wie es Schrauben im allgemeinen sind, mit geometrisch exakt definierten Schneidkanten zu versehen. Werden die Schneidkanten dagegen nur eingeschlagen oder eingepreßt, dann erhält man nicht die geforderten exakten Schneidwinkel, sondern mehr oder weniger gerundete Kerben, die die Bezeichnung "Schneidkanten" nicht verdienen und allenfalls eine Zerstörung der Bohrlochinnenwände und des darin von der Schraube eingeschnittenen Innengewindes zur Folge haben.

Aus der EP-B-267 153 ist eine Distanzschraube mit einer Ausnehmung zum Einstecken eines Werkzeugs, mit zwei, von einem gewindelosen, zylindrischen Abschnitt voneinander getrennten Gewindeabschnitten, bekannt, bei der der Nenndurchmesser der Schraube im Bereich des vorderen Gewindeabschnitts und des gewindelosen Abschnitts kleiner ist als im Bereich des hinteren, werkzeugseitigen Gewindeabschnitts und wobei sich die Schraube im Bereich des Übergangs von dem hinteren Gewindeabschnitt zu dem gewindelosen Abschnitt hin konisch verjüngt. Bei dieser Distanzschraube weisen beide Gewindeabschnitte gleiche Gewindeganghöhen auf, und der hintere Gewindeabschnitt ist mit einem scharfkantigen Schneidegewinde, vorzugsweise einem Spanplatten-Schraubengewinde oder einem Hoch-Tief-Gewinde, versehen.

Aus der EP-B-314 950 ist eine Distanzschraube der eingangs genannten Gattung bekannt, mit der höhere Auszugs- und Ausreißwerte erzielt werden können als mit den vorstehend beschriebenen Distanz- und Doppelgewindeschrauben und bei der gleichzeitig auf besondere Schneidkanten im Bereich des sich konisch verjüngenden Überganges zwischen dem hinteren, dickeren und dem vorderen, dünneren Schraubenteil bzw. zwischen den beiden Gewindeabschnitten verzichtet werden kann, ohne daß die Gefahr besteht, daß durch die Materialverdrängung des hinteren, dickeren Teils die Oberfläche des zu befestigenden Bauteils beschädigt wird. Bei dieser bekannten Distanzschraube ist das Gewinde des hinteren Gewindeabschnitts tiefer geschnitten und weist steilere und spitzere Gewindeflanken auf als das Gewinde des vorderen Gewindeabschnitts.

Durch das tiefer eingeschnittene Gewinde des hinteren Gewindeabschnitts wurde erreicht, daß das durch den hinteren, dickeren Schraubenteil verdrängte Material in der zwischen den Gewindegängen gebildeten Spiralnut genügend Platz findet, ohne daß die Gefahr besteht, daß die Oberfläche des zu befestigenden Bauteils ausbricht, sich aufwölbt oder auf andere Weise beschädigt wird. Die steileren und spitzeren Gewindeflanken des hinteren Gewindeabschnitts, verglichen mit den flacheren und runderen Gewindeflanken des vorderen Gewindeabschnitts, haben eine genügend ausgeprägte gewindeschneidende Wirkung, so daß auf besondere Schneidkanten verzichtet werden konnte. Es hat sich jedoch gezeigt, daß der vordere Gewindeabschnitt leicht vom gewindelosen Abschnitt der Schraube abreißen kann, wenn die Schraube mit hohem Drehmoment, z. B. mit Hilfe eines Elektrowerkzeugs, eingedreht wird.

Der Erfindung liegt deshalb die Aufgabe zugrunde, Distanzschrauben der eingangs genannten Gattung so weiterzuentwickeln, daß die Gefahr des Abreißens des vorderen Gewindeabschnitts mindestens deutlich reduziert, vorzugsweise ganz eliminiert wird.

Diese Aufgabe wird bei einer Distanzschraube der eingangs genannten Gattung erfindungsgemäß durch die Merkmale des Anspruchs 1 gelöst, wobei unter Anderen mindestens zwei Verstärkungsrippen auf dem Kern des vorderen Gewindeabschnitts angebracht sind, die, ausgehend vom vorderen Ende des gewindelosen Abschnitts parallel zur Schraubenlängsachse in Richtung Schraubenspitze verlaufen.

Vorzugsweise sind drei bis sechs Verstärkungsrippen gleichmäßig über den Umfang des Kerns des vorderen Gewindeabschnitts verteilt.

Es hat sich überraschenderweise gezeigt, daß die Verstärkungsrippen das Abreißen des vorderen Gewindeabschnitts an seinem Übergang zum vom gewindelosen Abschnitt sicher verhindern und daß die Auszugswerte durch die Verstärkungsrippen nicht verschlechtert werden. Bei den bisher bekannten Distanzschrauben riß der vordere Gewindeabschnitt besonders dann häufig am Übergang zum gewindelosen Abschnitt ab, wenn der gewindelose Abschnitt konisch auslief, weil der konische Übergang eine ungewollte Sollbruchstelle bildete.

Zweckmäßig, aber nicht zwingend notwendig, ist es, die Länge der Verstärkungsrippen auf einen Teil, vorzugsweise etwa die Hälfte, der Länge des vorderen Gewindeabschnitts zu begrenzen, um so am vorderen Ende der Verstärkungsrippen eine Art Sollbruchstelle zur Begrenzung des maximalen Drehmoments zu schaffen.

In radialer Richtung ist die Höhe der Verstärkungsrippen vorzugsweise etwas geringer als dem Nenndurchmesser der Distanzschraube entspricht, um das Eindrehen der Schraube nicht zu behindern und das Drehmoment nicht zu vergrößern. Die Gewinde des hinteren und des vorderen Gewindeabschnitts können identisch oder verschieden sein. Vorzugsweise ist jedoch das Gewinde des hinteren Gewindeabschnitts tiefer geschnitten und weist steilere und spitzere Gewindeflanken auf als das Gewinde des vorderen Gewindeabschnitts.

Vorzugsweise ist das Gewinde des hinteren Gewindeabschnitts selbstschneidend ausgebildet.

Eine besonders einfache, günstig herstellbare Ausführungsform der Erfindung ist dadurch gekennzeichnet, daß das Gewinde des vorderen Gewindeabschnitts ein Holzschraubengewinde, das Gewinde des hinteren Gewindeabschnitts ein Spanplattenschrauben- oder Blechschraubengewinde ist. Das Holzschraubengewinde entspricht vorzugsweise der DIN-Norm 7998. Bei Verwendung eines Blechschraubengewindes für den hinteren Gewindeabschnitt eignet sich die Distanzschraube insbesondere zur Abstandsmontage von Fensterrahmen und Zargen aus Aluminium oder anderen Metallteilen.

Die selbstschneidende Wirkung des Gewindes des hinteren Gewindeabschnitts ist besonders gut ausgeprägt, wenn der Flankenwinkel des Gewindes kleiner ist als 50° und vorzugsweise 40 ± 4° beträgt.

Die Schneideigenschaften des Gewindes des hinteren Gewindeabschnitts werden weiter dadurch gefördert, daß die Flanken dieses Gewindes einsatzgehärtet sind.

Der an sich nachteilige Einfluß des dickeren, hinteren Schraubenteils auf die Unversehrtheit der Oberfläche des zu befestigenden Bauteils im Bereich eines Bohrlochs oder, falls kein Vorbohren erforderlich ist, im Bereich der Einführungsstelle der Schraube wird auf besonders wirksame Weise dadurch vermindert oder völlig ausgeschaltet, daß der Konuswinkel im Bereich des Übergangs vom hinteren Gewindeabschnitt zum gewindelosen Abschnitt weniger als 25° und vorzugsweise 10 ± 2° beträgt. Der Übergang vom gewindelosen Abschnitt zum vorderen Gewindeabschnitt kann ebenfalls konisch ausgebildet sein.

Schließlich wird die gewindeschneidende Wirkung des Gewindegangs des hinteren Gewindeabschnitts dadurch gefördert, daß dieser Gewindegang zum gewindelosen Abschnitt hin scharfkantig ausläuft.

Dadurch, daß alle Gewinde etwa gleiche Ganghöhe und gleichsinnige Drehrichtung aufweisen, wird erreicht, daß das beim Eindrehen der Distanzschraube in das zu befestigende Bauteil in dem letzteren gebildete Innengewinde vom vorderen Gewindeabschnitt vorgebildet und vom hinteren Gewindeabschnitt nachgeschnitten wird; dadurch wird verhindert, daß der hintere Gewindeabschnitt das durch den vorderen Gewindeabschnitt vorgebildete Innengewinde wieder zerstört. Auf diese Weise werden optimale Auszugs- und Ausreißwerte erzielt.

Bei einer weiteren vorteilhaften Ausführungsform der erfindungsgemäßen Distanzschraube ist auf dem werkzeugseitigen Ende des hinteren Gewindeabschnitts ein Schlagring gebildet, der es gestattet, die Schraube, falls erwünscht oder erforderlich, so weit mit einem Hammer oder einem anderen Werkzeug einzuschlagen, bis der vordere Gewindeabschnitt einen gewissen Halt in der Wand oder in einem Dübel hat, ohne daß dabei die Gefahr besteht, daß die Ausnehmung zum Einstecken eines Werkzeugs oder der hintere Gewindeabschnitt durch die Hammerschläge beschädigt werden

Schließlich kann die Ausnehmung zum Einstecken eines Schraubendrehers, Schlüssels oder Bits die Form eines Quer- oder Kreuzschlitzes, eines Innenvielkants, z. B. eines Innensechskants, oder einer Einsteckrosette aufweisen. Ferner kann sich das Gewinde des vorderen Gewindeabschnitts (A) zusätzlich mindestens teilweise über den Mittelabschnitt (B) erstrecken.

Schließlich kann, wie an sich bekannt, die ganze Distanzschraube oder mindestens einer der beiden verschiedenen Gewindeabschnitte mit einer die Gleitreibung herabsetzenden Kunststoffbeschichtung, z. B. aus Polytetrafluorethylen, versehen sein. Die Schraube oder einzelne Bereiche der Schraube können auch metallische Überzüge, z. B. aus Zink oder Aluminium oder geeigneten Legierungen, tragen, die die mechanischen, elektrischen, chemischen und/oder magnetischen Eigenschaften der Schraube in an sich bekannter Weise beeinflussen können, beispielsweise dem Korrosionsschutz dienen. Schließlich können die beiden verschiedenen Gewindeabschnitte und/oder die werkzeugseitige Ausnehmung oder der Schlagring mit verschiedenfarbigen Überzügen versehen sein, um bestimmte Nenndurchmesser oder bestimmte Formen der Ausnehmung zu kennzeichnen und damit die Auswahl verschiedener Schraubengrößen oder Schraubentypen oder die Zuordnung der verschiedenen Ausnehmungen zu den verschiedenen, dafür passenden Einsteckwerkzeugen zu erleichtern.

Die Zeichnung zeigt ein Ausführungsbeispiel einer erfindungsgemäßen Distanzschraube. Darin ist:

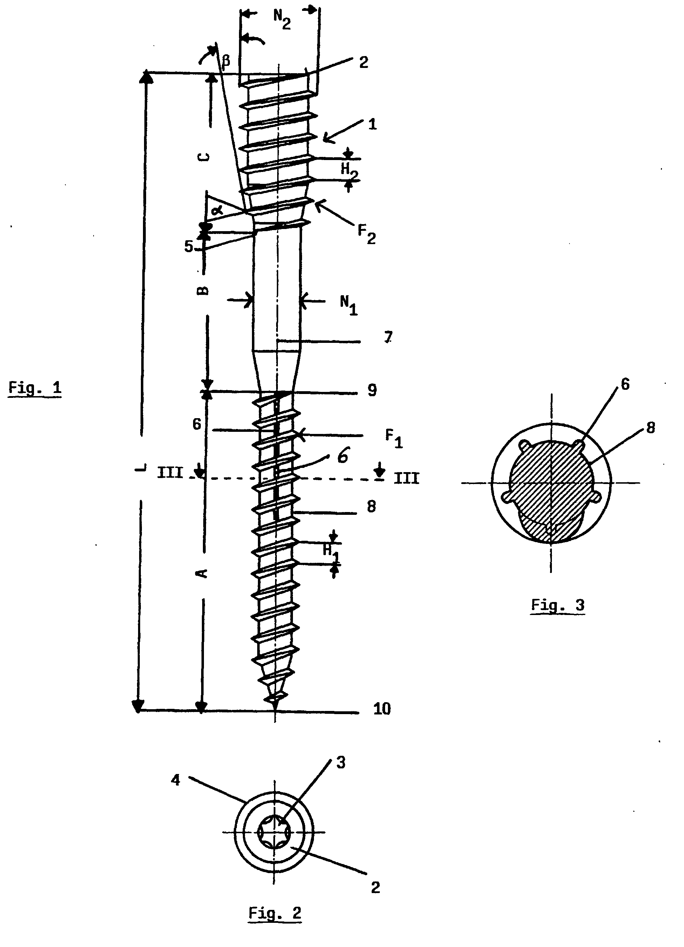

Fig. 1 eine teilweise geschnittene Seitenansicht der Distanzschraube;
Fig. 2 eine Draufsicht auf das hintere, werkzeugseitige Ende der Schraube gemäß Fig. 1; und
Fig. 3 ein vergrößerter Schnitt nach Linie III - III durch den vorderen Gewindeabschnitt der Schraube gemäß Fig. 1.

Die Distanzschraube 1 weist über ihre axiale Länge L im wesentlichen drei verschiedene Abschnitte auf, nämlich einen vorderen Gewindeabschnitt A mit Holzgewinde gemäß DIN 7998, einen mittleren, gewindelosen Abschnitt B und einen hinteren, werkzeugseitigen Gewindeabschnitt C mit einem Spanplattenschraubengewinde, welches tiefer geschnitten ist und steilere und spitzere Gewindeflanken F₂ aufweist als das Holzschraubengewinde des vorderen Gewindeabschnitts A mit seinen flacheren und runderen Gewindeflanken F₁.

Die Distanzschraube 1 besitzt ein Ausnehmung 3 in Form eines Torx®-Antriebs zum Einstecken eines hierfür passenden Werkzeugs. Auf dem werkzeugseitigen Ende des hinteren Gewindeabschnitts C ist ein Schlagring 2 als integraler Bestandteil der gesamten Distanzschraube gebildet.

Der mittlere, gewindelose Abschnitt B ist, abgesehen von seinem konischen Übergang zum vorderen Gewindeabschnitt A, zylindrisch und besitzt den Nenndurchmesser N₁ der Distanzschraube 1. Der die Gewindeflanke F₁ des vorderen Gewindeabschnitts A berührende gedachte Zylinder besitzt ebenfalls den Nenndurchmesser N₁. Die Gewindeflanken F₂ des hinteren, werkzeugseitigen Gewindeabschnitts C liegen dagegen auf der Mantelinnenfläche eines gedachten, umbeschreibbaren Zylinders 4 mit dem gegenüber N₁ größeren Durchmesser N₂.

Im Bereich des Übergangs von dem hinteren Gewindeabschnitt C zu dem mittleren, gewindelosen Abschnitt B hin verjüngt sich die Schraube konisch, und zwar mit einem Konuswinkel β von - bei dem gezeichneten Ausführungsbeispiel - etwa 10°.

Der Flankenwinkel α des Gewindes des hinteren Gewindeabschnitts C ist kleiner als 50°; vorzugsweise beträgt er, wie bei dem gezeichneten Ausführungsbeispiel, 40 ± 4°. Demgegenüber beträgt der Flankenwinkel des Gewindes des vorderen Gewindeabschnitts A gemäß DIN 7998 60 ± 6°. Somit sind die Gewindeflanken F₂ steiler und spitzer als die Gewindeflanken F₁.

Alle Gewinde besitzen etwa gleiche Ganghöhe (d. h. H₁ = H₂) und gleichsinnige Drehrichtung (entweder Links- oder Rechtsgewinde).

Der Gewindegang des hinteren Gewindeabschnitts C läuft zum gewindelosen Abschnitt B hin an der mit 5 bezeichneten Stelle scharfkantig aus.

Auf dem Kern 8 des vorderen Gewindeabschnitts A sind fünf Verstärkungsrippen 6 angebracht, die gleichmäßig über den Umfang des Kerns 8 verteilt sind und, ausgehend vom vorderen Ende 9 des gewindelosen Abschnitts B, parallel zur Schraubenlängsachse 7 in Richtung Schraubenspitze 10 verlaufen. Die Länge der Verstärkungsrippen 6 ist auf etwa die Hälfte der Länge des vorderen Gewindeabschnitts A begrenzt. In radialer Richtung ist die Höhe der Verstärkungsrippen 6 etwas geringer als dem Nenndurchmesser N₁ der Schraube 1 entspricht.

## Patentansprüche

1. Distanzschraube mit einer Ausnehmung zum Einstecken eines Werkzeugs, mit zwei, von einem gewindelosen Abschnitt voneinander getrennten Gewindeabschnitten, wobei der Nenndurchmesser der Schraube im Bereich des vorderen Gewindeabschnitts und des gewindelosen Abschnitts kleiner ist als im Bereich des hinteren, werkzeugseitigen Gewindeabschnitts und wobei sich die Schraube im Bereich des Übergangs von dem hinteren Gewindeabschnitt zu dem gewindelosen Abschnitt hin konisch verjüngt, **dadurch gekennzeichnet, daß** mindestens zwei Verstärkungsrippen (6) auf dem Kern (8) des vorderen Gewindeabschnitts (A) angebracht sind, die, ausgehend vom vorderen Ende (9) des gewindelosen Abschnitts (B), parallel zur Schraubenlängsachse (7) in Richtung Schraubenspitze (10) verlaufen, wobei die Höhe der Verstärkungsrippen (6) in radialer Richtung geringer ist, als dem Nenndurchmesser (N₁) der Schraube (1) entspricht.

2. Distanzschraube nach Anspruch 1, **dadurch gekennzeichnet, daß** drei bis sechs Verstärkungsrippen (6) gleichmäßig über den Umfang des Kerns (8) des vorderen Gewindeabschnitts (A) verteilt sind.

3. Distanzschraube nach Anspruch 1 oder 2, **dadurch gekennzeichnet, daß** die Länge der Verstärkungsrippen (6) auf einen Teil der Länge des vorderen Gewindeabschnitts (A) begrenzt ist.

4. Distanzschraube nach einem der Ansprüche 1 bis 3, **dadurch gekennzeichnet, daß** das Gewinde des hinteren Gewindeabschnitts (C) tiefer geschnitten ist und steilere und spitzere Gewindeflanken (F₂) aufweist als das Gewinde des vorderen Gewindeabschnitts (A).

5. Distanzschraube nach einem der Ansprüche 1 bis 4, **dadurch gekennzeichnet, daß** das Gewinde des hinteren Gewindeabschnitts (C) selbstschneidend ausgebildet ist.

6. Distanzschraube nach einem der Ansprüche 1 bis 5, **dadurch gekennzeichnet, daß** das Gewinde des vorderen Gewindeabschnitts (A) ein Holzschraubengewinde, das Gewinde des hinteren Gewindeabschnitts (C) ein Spanplattenschrauben- oder Blechschraubengewinde ist.

7. Distanzschraube nach einem der Ansprüche 1 bis 6, **dadurch gekennzeichnet, daß** der Flankenwinkel (α) des Gewindes des hinteren Gewindeabschnitts (C) kleiner ist als 50°.

8. Distanzschraube nach Anspruch 7, **dadurch gekennzeichnet, daß** der Flankenwinkel (α) 40 ± 4° beträgt.

9. Distanzschraube nach einem der Ansprüche 1 bis 8, **dadurch gekennzeichnet, daß** die Flanken (F₂) des Gewindes des hinteren Gewindeabschnitts (C) einsatzgehärtet sind.

10. Distanzschraube nach einem der Ansprüche 1 bis 9, **dadurch gekennzeichnet, daß** der Konuswinkel (β) im Bereich des Übergangs vom hinteren Gewindeabschnitt (C) zum gewindelosen Abschnitt (B) weniger als 25° beträgt.

11. Distanzschraube nach Anspruch 10, **dadurch gekennzeichnet, daß** der Konuswinkel (β) 10 ± 2° beträgt.

12. Distanzschraube nach einem der Ansprüche 1 bis 11, **dadurch gekennzeichnet, daß** der Gewindegang des hinteren Gewindeabschnitts (C) zum gewindelosen Abschnitt (B) hin scharfkantig ausläuft.

13. Distanzschraube nach einem der Ansprüche 1 bis 12, **dadurch gekennzeichnet, daß** alle Gewinde etwa gleiche Ganghöhe (H₁, H₂) und gleichsinnige Drehrichtung aufweisen.

14. Distanzschraube nach einem der Ansprüche 1 bis 13, **dadurch gekennzeichnet, daß** auf dem werkzeugseitigen Ende des hinteren Gewindeabschnitts (C) ein Schlagring (2) gebildet ist.

15. Distanzschraube nach einem der Ansprüche 1 bis 14, **dadurch gekennzeichnet, daß** sie als Ausnehmung (3) einen Querschlitz oder Kreuzschlitz, einen Innenvielkant oder eine Einsteckrosette zum Einstecken eines Schraubendrehers, Schlüssels oder Bits aufweist.

16. Distanzschraube nach einem der Ansprüche 1 bis 15, **dadurch gekennzeichnet, daß** sich das Gewinde des vorderen Gewindeabschnitts (A) zusätzlich mindestens teilweise über den Mittelabschnitt (B) erstreckt.

## Claims

1. A spacing screw comprising a recess for insertion of a tool and having two threaded portions separated from each other by a threadless portion, the nominal diameter of the screw in the region of the front threaded portion and of the threadless portion being smaller than in the region of the rear, tool-side threaded portion and the screw tapering conically in the region of the transition from the rear threaded portion to the threadless portion, **characterized in that** at least two reinforcement ribs (6) are provided on the core (8) of the front threaded portion (A), which starting from the front end (9) of the threadless portion (B) extend in parallelism to the screw longitudinal axis (7) towards the screw tip (10), the height of the reinforcement ribs (6) in radial direction being less than corresponding to the nominal diameter (N₁) of the screw (1).

2. The spacing screw according to claim 1, **characterized in that** three to six reinforcement ribs (6) are equidistantly distributed over the circumference of the core (8) of the front threaded portion (A).

3. The spacing screw according to claim 1 or 2, **characterized in that** the length of the reinforcement ribs (6) is limited to a part of the length of the front threaded portion (A).

4. The spacing screw according to any one of claims 1 to 3, **characterized in that** the thread of the rear threaded portion (C) is cut deeper and has steeper and more pointed thread flanks (F₂) than the thread of the front threaded portion (A).

5. The spacing screw according to any one of claims 1 to 4, **characterized in that** the thread of the rear threaded portion (C) is made self-cutting.

6. The spacing screw according to any one of claims 1 to 5, **characterized in that** the thread of the front threaded portion (A) is a wood screw thread and the thread of the rear threaded portion (C) is a chip board screw thread or sheet metal screw thread.

7. The spacing screw according to any one of claims 1 to 6, **characterized in that** the flank angle (α) of the thread of the rear threaded portion (C) is less than 50°.

8. The spacing screw according to claim 7, **characterized in that** the flank angle (α) is 40 ± 4°.

9. The spacing screw according to any one of claims 1 to 8, **characterized in that** the flanks (F₂) of the thread of the rear threaded portion (C) are case-hardened.

10. The spacing screw according to any one of claims 1 to 9, **characterized in that** the cone angle (β) in the region of the transition from the rear threaded portion (C) to the threadless portion (B) is less than 25°.

11. The spacing screw according to claim 10, **characterized in that** the cone angle (β) is 10 ± 2°.

12. The spacing screw according to any one of claims 1 to 11, **characterized in that** the flight of the rear threaded portion (C) terminates sharp-edged towards the threadless portion (B).

13. The spacing screw according to any one of claims 1 to 12, **characterized in that** all the threads have substantially the same pitch (H₁, H₂) and the same direction of rotation.

14. The spacing screw according to any one of claims 1 to 13, **characterized in that** a strike ring (2) is formed on the tool-side end of the rear threaded portion (C).

15. The spacing screw according to any one of claims 1 to 14, **characterized in that** it comprises as recess (3) a transverse slot or cross slot, a polygonal socket or an insert rosette for inserting a screwdriver, spanner or bit.

16. The spacing screw according to any one of claims 1 to 15, **characterized in that** the thread of the front threaded portion (A) additionally extends at least partially over the center portion (B).

## Revendications

1. Vis d'entretoisement présentant un évidement pour l'engagement d'un outil, comprenant deux parties filetées séparées par une partie non filetée, le diamètre nominal de la vis dans la zone de la partie filetée avant et de la partie non filetée étant plus petit que dans la zone de la partie filetée arrière côté outil, et la vis se rétrécissant coniquement dans la zone de transition de la partie filetée arrière vers la partie non filetée, **caractérisée par le fait que** sur le noyau (8) de la partie filetée avant (A) sont faites au moins deux nervures de renfort (6) qui partent de l'extrémité avant (9) de la partie non filetée (B) et s'étendent parallèlement à l'axe longitudinal (7) de la vis en direction de la pointe (10) de la vis, la hauteur des nervures de renfort (6) dans la direction radiale étant inférieure au diamètre nominal (N₁) de la vis (1).

2. Vis d'entretoisement selon la revendication 1, **caractérisée par le fait que** trois à six nervures de renfort (6) sont réparties uniformément sur le pourtour du noyau (8) de la partie filetée avant (A).

3. Vis d'entretoisement selon l'une des revendications 1 et 2, **caractérisée par le fait que** la longueur des nervures de renfort (6) est limitée à une partie de la longueur de la partie filetée avant (A).

4. Vis d'entretoisement selon l'une des revendications 1 à 3, **caractérisée par le fait que** le filetage de la partie filetée arrière (C) est taillé plus profondément et présente des flancs (F2) plus raides et plus pointus que le filetage de la partie filetée avant (A).

5. Vis d'entretoisement selon l'une des revendications 1 à 4, **caractérisée par le fait que** le filetage de la partie filetée arrière (C) est autotaraudant.

6. Vis d'entretoisement selon l'une des revendications 1 à 5, **caractérisée par le fait que** le filetage de la partie filetée avant (A) est un filetage de vis à bois et le filetage de la partie filetée arrière (C) est un filetage de vis à panneaux de particules ou un filetage de vis à tôles.

7. Vis d'entretoisement selon l'une des revendications 1 à 6, **caractérisée par le fait que** l'angle du filet (α) du filetage de la partie filetée arrière (C) est inférieur à 50°.

8. Vis d'entretoisement selon la revendication 7, **caractérisée par le fait que** l'angle du filet (α) est de 40° ± 4°.

9. Vis d'entretoisement selon l'une des revendications 1 à 8, **caractérisée par le fait que** les flancs (F₂) du filetage de la partie filetée arrière (C) sont cémentés et trempés.

10. Vis d'entretoisement selon l'une des revendications 1 à 9, **caractérisée par le fait que** le demi-angle au sommet du cône (β) dans la zone de transition de la partie filetée arrière (C) à la partie non filetée (B) est inférieur à 25°.

11. Vis d'entretoisement selon la revendication 10, **caractérisée par le fait que** le demi-angle au sommet du cône (β) est de 10° ± 2°.

12. Vis d'entretoisement selon l'une des revendications 1 à 11, **caractérisée par le fait que** le filet de la partie filetée arrière (C) se termine à arête vive vers la partie non filetée (B).

13. Vis d'entretoisement selon l'une des revendications 1 à 12, **caractérisée par le fait que** tous les filetages présentent à peu près le même pas (H₁, H₂) et le même sens.

14. Vis d'entretoisement selon l'une des revendications 1 à 13, **caractérisée par le fait qu'**un anneau de frappe (2) est formé sur l'extrémité côté outil de la partie filetée arrière (C).

15. Vis d'entretoisement selon l'une des revendications 1 à 14, **caractérisée par le fait qu'**elle présente comme évidement (3) une fente transversale ou une fente cruciforme, un polygone femelle ou une rosette creuse pour l'engagement d'un tournevis, d'une clé ou d'un bit.

16. Vis d'entretoisement selon l'une des revendications 1 à 15, **caractérisée par le fait que** le filetage de la partie filetée avant (A) s'étend en plus au moins en partie sur la partie médiane (B).
